# EUROPEAN PATENT APPLICATION

(11) **EP 4 557 442 A1**
(43) Date of publication of application: **21.05.2025**
(21) Application number: 23903659.3
(22) Date of filing: 25.07.2023
(51) Int. Cl.: H01M 10/0587, H01M 10/04, H01M 10/052, H01M 50/10

(54) **ELECTRODE ASSEMBLY AND CYLINDRICAL LITHIUM-SULFUR BATTERY CELL COMPRISING SAME, AND BATTERY PACK AND VEHICLE COMPRISING CYLINDRICAL LITHIUM-SULFUR BATTERY CELL**

(30) Priority: 16.12.2022 KR 20220177618; 24.03.2023 KR 20230038899
(71) Applicant: LG Energy Solution, Ltd., Seoul 07335 (KR)
(72) Inventor: LEE, Jong-Yoon, Daejeon 34122 (KR); KIM, Hyeon-Jin, Daejeon 34122 (KR); NOH, Jae-Kyo, Daejeon 34122 (KR); HAN, Sueng-Hoon, Daejeon 34122 (KR); HONG, Kyung-Sik, Daejeon 34122 (KR); HONG, Suk-Hyun, Daejeon 34122 (KR)
(74) Representative: Goddar, Heinz J.
(86) International application number: PCT/KR2023/010776
(87) International publication number: WO 2024/128455

(57) **Abstract**

Disclosed are an electrode assembly and a cylindrical lithium-sulfur battery cell including the same, and a battery pack and a vehicle including the cylindrical lithium-sulfur battery cell. According to an embodiment of the present disclosure, there is provided a jelly roll type electrode assembly having a structure in which a positive electrode plate, a negative electrode plate, and a separator interposed therebetween are wound in one direction and having a center hole formed therein, the electrode assembly including a center pin that is inserted into the center hole to press the electrode assembly.

## Description

### TECHNICAL FIELD

The present application claims priority to Korean Patent Application No. 10-2022-0177618 filed on December 16, 2022 and Korean Patent Application No. 10-2023-0038899 filed on March 24, 2023, the disclosures of which are incorporated herein by reference.

The present disclosure relates to an electrode assembly and a cylindrical lithium-sulfur battery cell including the same, and a battery pack and a vehicle including the cylindrical lithium-sulfur battery cell, and more specifically, to an electrode assembly capable of pressing the center of the electrode assembly and a cylindrical lithium-sulfur battery cell including the same, and a battery pack and a vehicle including the cylindrical lithium-sulfur battery cell.

### BACKGROUND ART

As the application area of secondary batteries expands to an electric vehicle (EV) or an energy storage system (ESS), lithium-ion secondary batteries with a relatively low energy storage density (~250 Wh/kg) relative to weight have limited applications to these products.

In contrast, since lithium-sulfur secondary batteries may theoretically achieve a high energy storage density (~2,600 Wh/kg) relative to weight, they are in the spotlight as next-generation secondary battery technology.

A lithium-sulfur secondary battery is a battery system that uses a sulfur-based material with a sulfur-sulfur bond as a positive electrode active material and a lithium metal as a negative electrode active material. This lithium-sulfur secondary battery has the advantage that sulfur, the main material of the positive electrode active material, is abundant in resources worldwide, is not toxic, and has a low weight per atom.

In a lithium-sulfur secondary battery, during discharging, lithium, which is the negative electrode active material, donates electrons to be ionized and is oxidized, and the sulfur-based material, which is the positive electrode active material, receives electrons and is reduced. At this time, the oxidation reaction of lithium is a process in which lithium metal donates electrons and is converted into a lithium cation form.

In addition, the reduction reaction of sulfur is a process in which the sulfur-sulfur bond receives two electrons and is converted into a sulfur anion form. The lithium cation produced by the oxidation reaction of lithium is transferred to the positive electrode through the electrolyte and is combined with the sulfur anion produced by the reduction reaction of sulfur to form a salt.

Specifically, prior to discharging, sulfur has a cyclic S₈ structure, which is converted into lithium polysulfide (Li₂Sx, x = 8, 6, 4, 2) by a reduction reaction, and when this lithium polysulfide is completely reduced, lithium sulfide (Li₂S) is finally produced.

In order for a lithium-sulfur secondary battery to operate and exhibit proper electrochemical performance, an appropriate level of pressure should be applied to the electrode assembly during operation.

For example, when lithium metal is used as a negative electrode active material in a lithium-sulfur secondary battery, if charging and discharging are repeated in this state, the thickness of the lithium metal itself increases due to uneven plating and stripping of the lithium metal.

In this case, side reactions with the electrolyte may be triggered due to an increase in the specific surface area of lithium metal, the cell performance may deteriorate as dead Li or the like is generated, and additionally, an internal short circuit may occur due to the growth of lithium metal dendrite.

As such, various problems associated with using lithium metal as a negative electrode active material may be solved by pressing the electrode assembly. Here, when the lithium-sulfur secondary battery is manufactured in a pouch type, pressure applied from the outside may be transmitted to the electrode assembly.

However, when the lithium-sulfur secondary battery is designed as a jelly roll type cylindrical shape and a cylindrical metal can is used as the battery housing, pressure cannot be applied to the electrode assembly during operation of the secondary battery, which causes various problems described above, resulting in making it difficult to operate the battery normally.

### DISCLOSURE

### Technical Problem

The present disclosure is designed to solve the problems of the related art, and therefore the present disclosure is directed to providing a jelly roll type electrode assembly, particularly an electrode assembly in which pressure is applied to a center hole.

The present disclosure is also directed to providing a cylindrical lithium-sulfur battery cell including an electrode assembly with an improved structure, and a battery pack and a vehicle including the cylindrical lithium-sulfur battery cell.

Technical problems to be solved by the present disclosure are not limited to the above-described problems, and other problems not mentioned herein may be clearly understood by those skilled in the art from the following description of the present disclosure.

### Technical Solution

According to one aspect of the present disclosure, there is provided a jelly roll type electrode assembly having a structure in which a positive electrode plate, a negative electrode plate, and a separator interposed therebetween are wound in one direction and having a center hole formed therein, the electrode assembly including a center pin that is inserted into the center hole to press the electrode assembly.

In an embodiment, the center pin may include a core portion that is inserted into the center hole, has an opening formed therein, and varies in the size of the diameter in at least a portion thereof; and an insertion portion that is inserted into the opening of the core portion to adjust the size of the diameter of the core portion.

In an embodiment, the core portion may include a support portion located at the upper side and having the opening formed therein; a connection portion coupled to the support portion; and an expansion portion that is coupled to the connection portion, expands on both sides by the insertion portion and presses the electrode assembly in a centrifugal direction.

In an embodiment, the expansion portion may include a plurality of units, a preset space may be formed between the plurality of units, and the insertion portion inserted from the opening may be inserted through the space.

In an embodiment, the expansion portion may include a first unit and a second unit, each of the first unit and the second unit may have at least one protrusion and at least one groove, and the protrusion and groove of the first unit and the groove and protrusion of the second unit may be alternately positioned to correspond to each other.

In an embodiment, a portion of the protrusion of the first unit may be configured to be engaged with a portion of the groove of the second unit, and a portion of the groove of the first unit may be configured to be engaged with a portion of the protrusion of the second unit.

In an embodiment, the protrusion and groove of the first unit may have a curvature in a preset range, and the protrusion and groove of the second unit may also have a curvature in a preset range.

In an embodiment, the protrusion and groove of the first unit may have a round shape, and the protrusion and groove of the second unit may also have a round shape.

In an embodiment, before the insertion portion is inserted, the expansion portion may be formed in a shape where the size of the diameter thereof decreases from the top to the bottom.

In an embodiment, the diameter of the connection portion may be configured to be smaller than the diameter of the support portion and to be also smaller than the diameter of the expansion portion.

In an embodiment, the connection portion may be coupled to the center of the support portion, and the support portion may have a wide width in the vertical direction at the center where the connection portion is coupled and a narrower width in the vertical direction from the center to both ends.

In an embodiment, the insertion portion may include a head; and a rod portion extending from the head.

Meanwhile, according to another aspect of the present disclosure, there is provide a cylindrical lithium-sulfur battery cell including an electrode assembly described above; a cylindrical battery can in which the electrode assembly is accommodated; a positive electrode current collector electrically connected to the positive electrode plate; a cell terminal connected to the positive electrode current collector through a through hole of the battery can; and a negative electrode current collector electrically connected to the negative electrode plate.

Meanwhile, according to still another aspect of the present disclosure, there are provided a battery pack including a cylindrical lithium-sulfur battery cell described above, and a vehicle including the cylindrical lithium-sulfur battery cell.

### Advantageous Effects

The center pin according to the present disclosure is inserted into the center hole of a jelly roll type electrode assembly to press the electrode assembly, thereby having the effect of maximizing the expression of electrochemical performance when applied to a cylindrical lithium-sulfur battery cell.

It also has the effect of reducing side reactions of the electrolyte, preventing deterioration of cell performance caused by dead lithium or the like, and preventing internal short circuits.

In addition, the present disclosure may have various other effects, which will be described in each embodiment, or the description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a schematic cross-sectional view of a cylindrical lithium-sulfur battery cell according to an embodiment of the present disclosure, in which a center pin is separated from an electrode assembly.
FIG. 2 is a cross-sectional view of the core portion of a center pin inserted into a center hole of an electrode assembly according to an embodiment of the present disclosure.
FIG. 3 is a plan view of the core portion of a center pin inserted into a center hole of an electrode assembly according to an embodiment of the present disclosure.
FIG. 4 is a perspective view of the insertion portion of a center pin inserted into a center hole of an electrode assembly according to an embodiment of the present disclosure.
FIG. 5 is a cross-sectional view showing that the insertion portion is inserted into the core portion in a center pin inserted into a center hole of an electrode assembly according to an embodiment of the present disclosure.
FIG. 6 is a plan view showing that the insertion portion is inserted into the core portion in a center pin inserted into a center hole of an electrode assembly according to an embodiment of the present disclosure.
FIG. 7 is a schematic cross-sectional view showing that the core portion of a center pin is coupled to an electrode assembly in a cylindrical lithium-sulfur battery cell according to an embodiment of the present disclosure.
FIG. 8 is a schematic cross-sectional view showing that the insertion portion is inserted into the core portion in FIG. 7, in which the core portion presses an electrode assembly by the insertion portion.
FIG. 9 is another embodiment of FIG. 2.
FIG. 10 is another embodiment of FIG. 5.
FIG. 11 is a view schematically showing the configuration of a battery pack according to an embodiment of the present disclosure.
FIG. 12 is a view for describing a vehicle including the battery pack of FIG. 11.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, to help understanding of the present disclosure, the accompanying drawings are not drawn to actual scale, but dimensions of some components may be exaggerated. In addition, the same reference numeral may be assigned to the same component in different embodiments.

The terms used herein are for the purpose of describing exemplary embodiments only and are not intended to limit the present disclosure. Singular expressions include plural expressions unless the context clearly indicates otherwise.

The terms indicating directions as used herein such as upper, lower, left, right, front, rear, inner, and outer are used for convenience of description only, and it is obvious to those skilled in the art that the terms may vary depending on the position of a reference object or an observer.

In addition, throughout the specification, when a part is said to "include" and "have" a component, this means that it may further include other components rather than excluding other components, unless specifically states to the contrary.

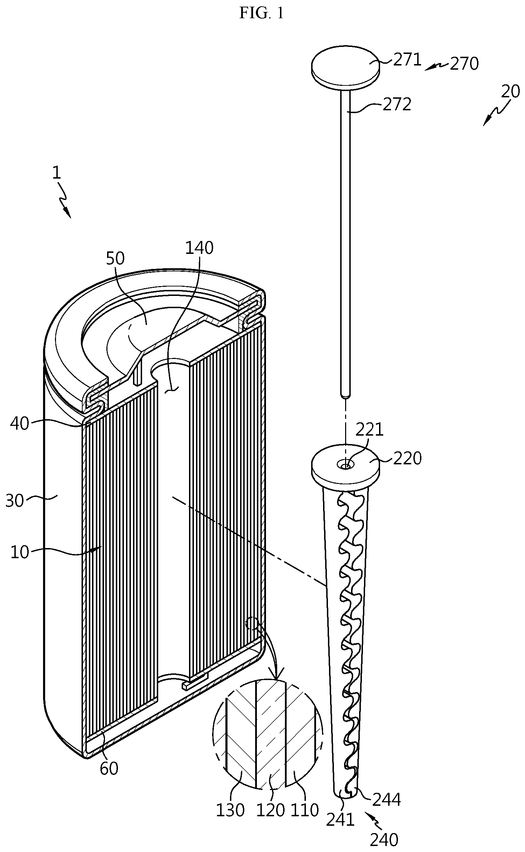

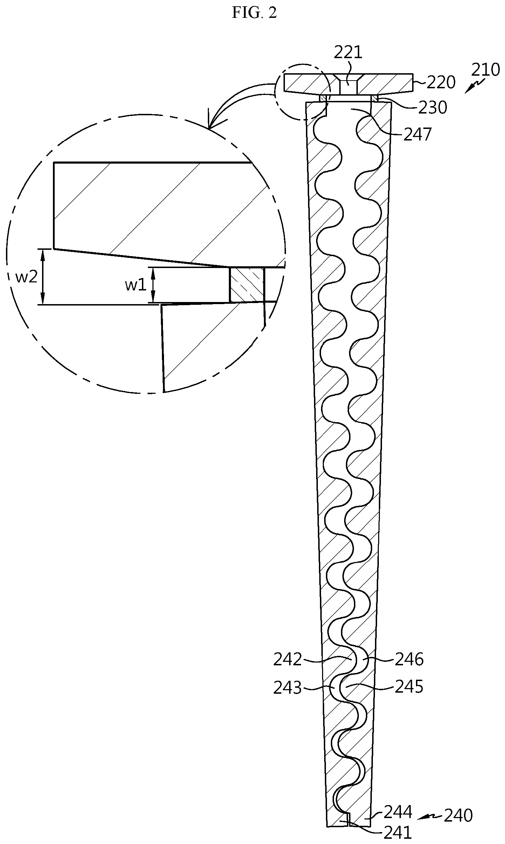

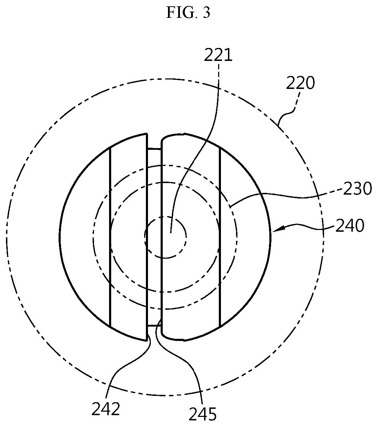

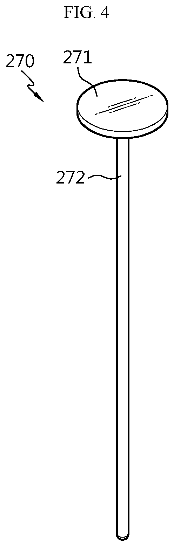

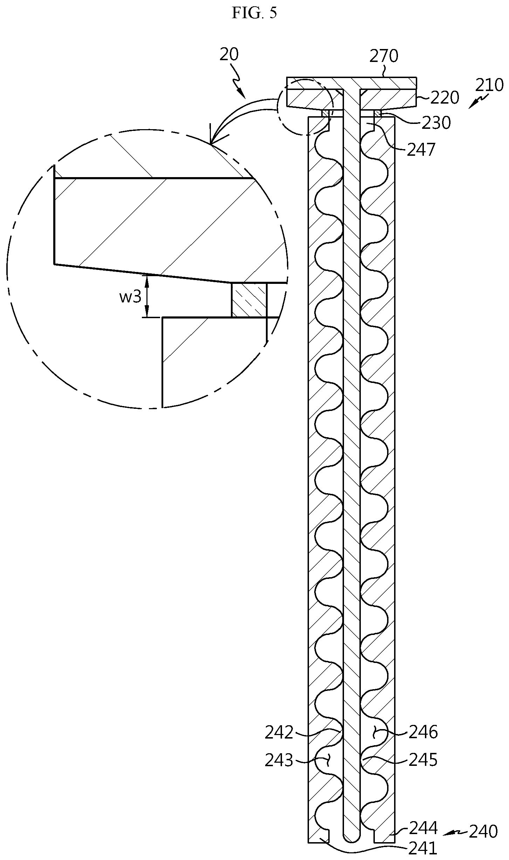

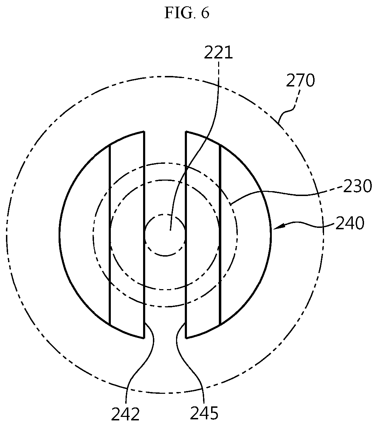

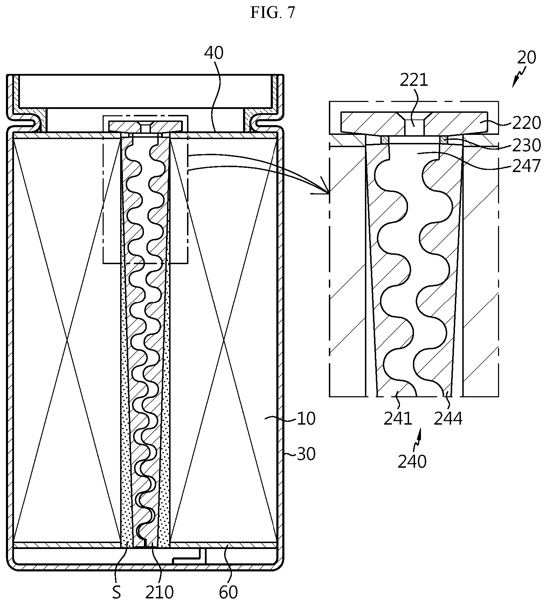

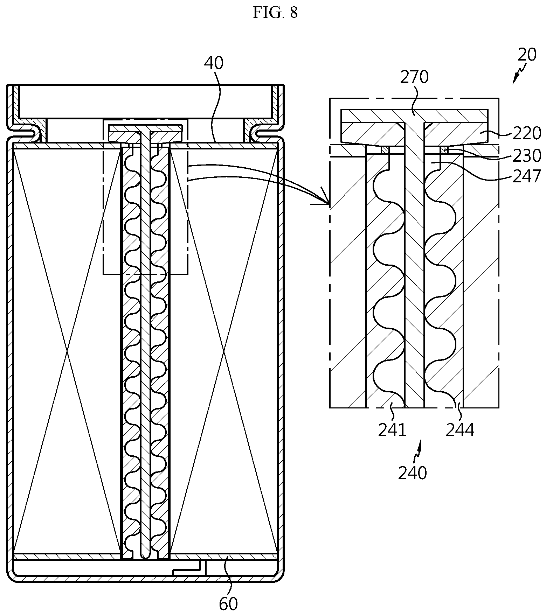

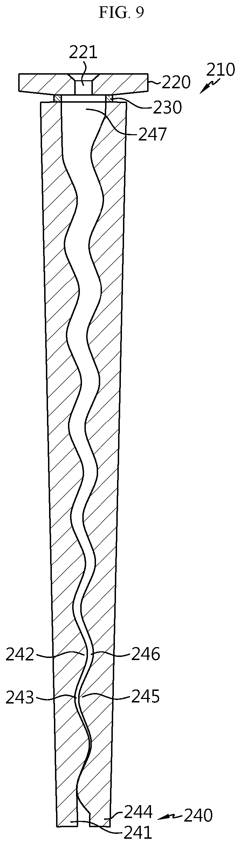

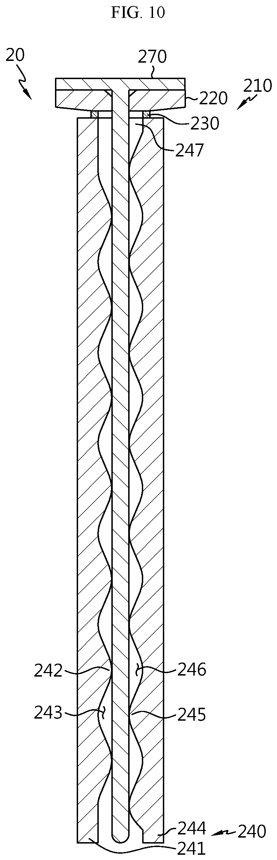

FIG. 1 is a schematic cross-sectional view of a cylindrical lithium-sulfur battery cell according to an embodiment of the present disclosure, in which a center pin is separated from an electrode assembly, FIG. 2 is a cross-sectional view of the core portion of a center pin inserted into a center hole of an electrode assembly according to an embodiment of the present disclosure, FIG. 3 is a plan view of the core portion of a center pin inserted into a center hole of an electrode assembly according to an embodiment of the present disclosure, FIG. 4 is a perspective view of the insertion portion of a center pin inserted into a center hole of an electrode assembly according to an embodiment of the present disclosure, FIG. 5 is a cross-sectional view showing that the insertion portion is inserted into the core portion in a center pin inserted into a center hole of an electrode assembly according to an embodiment of the present disclosure, FIG. 6 is a plan view showing that the insertion portion is inserted into the core portion in a center pin inserted into a center hole of an electrode assembly according to an embodiment of the present disclosure, FIG. 7 is a schematic cross-sectional view showing that the core portion of a center pin is coupled to an electrode assembly in a cylindrical lithium-sulfur battery cell according to an embodiment of the present disclosure, FIG. 8 is a schematic cross-sectional view showing that the insertion portion is inserted into the core portion in FIG. 7, in which the core portion presses an electrode assembly by the insertion portion, FIG. 9 is another embodiment of FIG. 2, and FIG. 10 is another embodiment of FIG. 5.

Referring to FIG. 1, the electrode assembly 10 is formed in a jelly roll type wound with a current collector and a separator 120 interposed between a long sheet-like positive electrode plate 110 and negative electrode plate 130 coated with an electrode active material on the surface of the current collector.

That is, the electrode assembly 10 includes a positive electrode plate 110, a negative electrode plate 130, and a separator 120, and is wound in one direction with the separator 120 interposed between the positive electrode plate 110 and the negative electrode plate 130.

Here, when the electrode assembly 10 is wound, a winding core is placed at one end of the electrode assembly 10, and after the electrode assembly 10 is wound around the winding core, the winding core is removed, and then a center hole 140 is formed at the center where the winding core has been removed. Then, a center pin 20 is inserted into the center hole 140 to press the electrode assembly 10. The center pin 20 will be described in detail later.

In the positive electrode plate 110, a positive electrode active material layer including a positive electrode active material is formed on at least one surface of the positive electrode current collector 40. A positive electrode tab may be attached to the positive electrode plate 110, and the positive electrode tab may be attached to an uncoated portion of the positive electrode current collector 40 where the positive electrode active material is not applied by a method such as ultrasonic fusion or the like.

However, the present disclosure does not necessarily require an uncoated portion to be formed and is not limited by the method of attaching the positive electrode tab as described above, and various tab attachment techniques known at the time of filing the present disclosure may be employed in the present disclosure.

Meanwhile, as the positive electrode current collector 40, a thin metal plate with excellent conductivity, such as aluminum (Al) foil, may be used, and the positive electrode tab may be made of, for example, aluminum (Al).

The negative electrode plate 130 is formed by applying a negative electrode active material to at least one surface of the negative electrode current collector 60, and a negative electrode tab is attached to the negative electrode plate 130. As with the positive electrode tab, this negative electrode tab may also be attached to the uncoated portion of the negative electrode current collector 60 where the negative electrode active material is not applied, and various attachment methods such as ultrasonic fusion may be applied.

And, as with the description of the positive electrode plate 110, the negative electrode plate 130 is also not required to have an uncoated portion and is not limited by the method of attaching the negative electrode tab as described above, and various tab attachment techniques known at the time of filing the present disclosure may be employed in the present disclosure.

And, as the negative electrode current collector 60, a conductive metal thin plate, such as copper (Cu) or nickel (Ni) foil, may be used, and the negative electrode tab may be made of, for example, nickel (Ni).

The separator 120 is disposed between the positive electrode plate 110 and the negative electrode plate 130 to insulate the positive electrode plate 110 and the negative electrode plate 130 and to allow active material ions to be exchanged between the positive electrode plate 110 and the negative electrode plate 130. The separator 120 may be used without particular limitation as long as it is conventionally used as a separator 120 in a lithium secondary battery.

Specifically, the separator 120 may be a porous polymer film, for example, a porous polymer film made of a polyolefin-based polymer such as ethylene homopolymer, propylene homopolymer, ethylene/butene copolymer, ethylene/hexene copolymer, and ethylene/methacrylate copolymer, or a stacked structure of two or more layers thereof.

And, conventional porous nonwoven fabrics, for example, nonwoven fabrics made of high melting point glass fibers, polyethylene terephthalate fibers, and the like, may be used. In addition, a separator 120 coated with a coating layer including a heat-resistant polymer material such as a ceramic component or engineering plastic may also be used to secure heat resistance or mechanical strength.

In the cylindrical lithium-sulfur battery cell 1 according to an embodiment of the present disclosure, the sulfur-based material may be at least one selected from the group consisting of inorganic sulfur (S₈), Li₂Sn (n ≥ 1), disulfide compounds such as 2,5-dimercapto-1,3,4-thiadiazole, 1,3,5-trithiocyanuic acid, and the like, organosulfur compounds, and carbon-sulfur polymers ((C₂Sx)n, x = 2.5 to 50, n ≥ 2). Preferably, it may include inorganic sulfur (S₈).

In an embodiment of the present disclosure, the sulfur-based material may be included in the positive electrode active material in the form of a sulfur-carbon composite compounded with a carbon material. The positive electrode active material may include 80 wt% or more of a sulfur-carbon composite based on 100 wt% of the positive electrode active material, and here, the content of the sulfur-based material based on 100 wt% of the sulfur-carbon composite is preferably 70 wt% or more.

In an embodiment of the present disclosure, the sulfur-carbon composite may be compounded by simply mixing sulfur and a carbon material, or may have a coating form of the core-shell structure or a supported form. The coating form of the core-shell structure is a coating form where either sulfur or a carbon material is coated with the other material, and in an embodiment, the surface of the carbon material may be wrapped with sulfur or vice versa. And, the carbon material has a porous structure with pores on the inside and surface of the body, and particularly, may be in a form in which the internal pores are filled with sulfur.

The carbon material has a porous structure including a large number of irregular pores on the surface and inside, serves as a carrier providing a skeleton on which sulfur may be fixed uniformly and stably, and compensates for the low electrical conductivity of sulfur to allow the electrochemical reaction to proceed smoothly.

In the sulfur-carbon composite according to an embodiment of the present disclosure, the carbon material may be any carbon-based material having porosity and conductivity as long as it is commonly used in the art.

Particular examples of the carbon material may include at least one selected from the group consisting of graphite; graphene; carbon black such as denka black, acetylene black, ketjen black, channel black, furnace black, lamp black, and summer black; carbon nanotubes (CNTs) such as single-walled carbon nanotubes (SWCNTs) and multi-walled carbon nanotubes (MWCNTs); carbon fibers such as graphite nanofibers (GNFs), carbon nanofibers (CNFs), and activated carbon fibers (ACFs); graphite such as natural graphite, artificial graphite, and expanded graphite; carbon nanoribbon; carbon nanobelts, carbon nanorods, and activated carbon.

In addition, in an embodiment of the present disclosure, the sulfur-carbon composite may be prepared by a compounding method including the steps of (S1) mixing the carbon material and sulfur to form a mixture, and then (S2) compounding the mixture.

The mixing in step (S1) is to increase the degree of mixing between sulfur and carbon materials, and may be performed using a stirring device commonly used in the art. At this time, mixing time and speed may also be selectively adjusted according to the content and conditions of the raw materials.

And, the compounding method in step (S2) is not particularly limited in the present disclosure, and methods commonly used in the art may be used. In an embodiment, methods commonly used in the art, such as dry compounding or wet compounding like spray coating, may be used. In an embodiment, a method in which the mixture of sulfur and a carbon material obtained after mixing is heat treated so that the molten sulfur may be evenly coated on the inner and outer surfaces of the carbon material may be used.

Meanwhile, in an embodiment of the present disclosure, a process of pulverizing the mixture of sulfur and a carbon material by a method such as ball milling may be performed before heat treatment. In an embodiment of the present disclosure, the heat treatment may be performed for about 20 minutes to 24 hours at a temperature condition of 120°C to 160°C, and a heating device such as an oven may be applied.

Since the sulfur-carbon composite prepared by the above-described manufacturing method has a structure with a high specific surface area, a high amount of sulfur retention, and an improved utilization of sulfur, it may not only improve the electrochemical reactivity of sulfur, but also enhance accessibility and contact ability of the electrolyte, thereby enhancing the capacity and life characteristics of lithium-sulfur batteries.

In addition to contents described in this specification regarding the configuration, material, manufacturing method, and the like of the above-described positive electrode plate 110, negative electrode plate 130, and separator 120, contents widely known to those skilled in the art may be employed in the present disclosure, but detailed descriptions thereof will be omitted in this specification.

Referring to FIGS. 1 and 8 together, the center pin 20 is inserted into the center hole 140 of the jelly roll type electrode assembly 10 to press the electrode assembly 10 as described above. The center pin 20 according to an embodiment of the present disclosure structurally supports the electrode assembly 10 and may apply a preset range of pressure from the winding center in an outward direction.

The center pin 20 may be configured to include a core portion 210 and an insertion portion 270. The center pin 20 may have a long rod-shaped appearance, but is not limited thereto.

Referring to FIGS. 1 to 3 together, the core portion 210 is inserted into the center hole 140 formed in the electrode assembly 10. And, an opening 221 is formed in the core portion 210. And, at least a part of the core portion 210 (e.g., the lower side of the core portion 210) is formed so that the size of the diameter changes.

The center pin 20 is inserted into the center hole 140 of the electrode assembly 10 to apply pressure in the outward direction of the electrode assembly 10, whereby the center pin 20 is closely fixed to the electrode assembly 10. In addition, the electrode assembly 10 accommodated in the battery can 30 may be fixed in close contact with the battery can 30 by the pressure of the center pin 20.

And, the insertion portion 270 is configured to be inserted into the opening 221 of the core part 210 to adjust the size of the diameter of the core portion 210.

The insertion portion 270 may be configured in various ways. For example, referring to FIG. 4, the insertion portion 270 may be configured to include a head 271 and a rod portion. The head 271 may be formed, for example, in the shape of a disk. And, the rod portion 272 extends from the head 271. The insertion portion 270 may be formed, for example, in the shape of a nail or a pushing pin.

Referring to FIGS. 5 and 8 together, when the insertion portion 270 is inserted into the core portion 210 and presses the core portion 210, the core portion 210 expands to both sides and presses the electrode assembly 10. Here, the core portion 210 is made of, for example, a flexible or elastic polymer material, so that its shape may be easily deformed by the insertion and separation of the insertion portion 270.

In addition, the inner surface of the core portion 210 and the outer surface of the insertion portion 270 may be treated with a low-friction coating such as Teflon coating to minimize frictional force, thereby facilitating insertion of the insertion portion 270 into the core portion 210.

Meanwhile, when manufacturing the cylindrical lithium-sulfur battery cell 1, the jelly roll type electrode assembly 10 with the core portion 210 inserted is first accommodated in the battery can 30 before inserting the insertion portion 270 into the core portion 210. When the insertion portion 270 is inserted into the core portion 210, the expansion portion 240 of the center pin 20 expands, and thus it may not be easy to insert the electrode assembly 10 into the exterior material.

Accordingly, it is preferable to insert the electrode assembly 10 into the battery can 30 before the insertion portion 270 is inserted into the core portion 210. However, it is not limited to this.

After accommodating the electrode assembly 10 into which the core portion 210 is inserted in the battery can 30 in this way, the insertion portion 270 is inserted to penetrate the support portion 220 of the core portion 210, thereby coupling the core portion 210 and the insertion portion 270.

The core portion 210 may be formed in various shapes, but may be formed in a shape corresponding to the shape of the center hole 140 so that it can be inserted through the center hole 140 of the electrode assembly 10.

The core portion 210 may include a support portion 220, a connection portion 230, and an expansion portion 240.

The support portion 220 is located at an upper side, and an opening 221 into which the insertion portion 270 may be inserted is formed. Referring to FIG. 3, the opening 221 may be formed, for example, at the center of the support portion 220. And, referring to FIG. 7, the diameter of the support portion 220 is formed to be larger than the diameter of the center hole 140 of the electrode assembly 10, whereby the support portion 220 may be located at the upper side of the electrode assembly 10 without being inserted into the center hole 140.

One side of the connection portion 230 is coupled to the support portion 220 and the other side is coupled to the expansion portion 240 to connect the support portion 220 and the expansion portion 240. The expansion portion 240 is coupled to the connection portion 230 and expands on both sides by the insertion portion 270 (see FIGS. 5 and 8) to press the electrode assembly 10 in the centrifugal direction.

The expansion portion 240 may include a plurality of units. For example, the expansion portion 240 may include a first unit 241 and a second unit 244, but is not limited thereto. However, for convenience of description, a case where the expansion portion 240 includes the first unit 241 and the second unit 244 will be described hereinafter.

Referring to FIGS. 2 and 5 together, a preset space 247 is formed between the plurality of units, that is, the first unit 241 and the second unit 244. And, the insertion portion 270 inserted from the opening 221 is inserted through the space 247.

Here, referring to FIG. 2, the first unit 241 and the second unit 244 may be configured to have at least one protrusion 242, 245 and at least one groove 243, 246, respectively.

And, the protrusion 242 and groove 243 of the first unit 241 and the groove 246 and protrusion 245 of the second unit 244 may be alternately positioned to correspond to each other. That is, the protrusion 242 of the first unit 241 may be formed at the same position as the groove 246 of the second unit 244, and the groove 243 of the first unit 241 may be formed at the same position as the protrusion 245 of the second unit 244.

Here, the protrusion 242 and groove 243 of the first unit 241 and the groove 246 and protrusion 245 of the second unit 244 may be configured to be in contact with each other, or to be spaced apart from each other.

For example, in FIG. 2, the protrusion 242 and groove 243 of the first unit 241 and the groove 246 and protrusion 245 of the second unit 244 are not in contact with each other on the upper side, but the protrusion 242 and groove 243 of the first unit 241 and the groove 246 and protrusion 245 of the second unit 244 are in contact with each other, respectively, on the lower side. However, this configuration is one embodiment, and various modified embodiments are possible.

And, when the protrusion 242 and groove 243 of the first unit 241 and the groove 246 and protrusion 245 of the second unit 244 are in contact with each other, a portion of the protrusion 242 of the first unit 241 may be configured to be engaged with a portion of the groove 246 of the second unit 244, and a portion of the groove 243 of the first unit 241 may be configured to be engaged with a portion of the protrusion 245 of the second unit 244.

Referring to FIG. 2, the protrusion 242 and groove 243 of the first unit 241 may have a curvature in a preset range. For example, the protrusion 242 and groove 243 of the first unit 241 may have a round shape.

And, the protrusion 245 and groove 246 of the second unit 244 may also have a curvature in a preset range. For example, the protrusion 245 and groove 246 of the second unit 244 may have a round shape.

If the curvature is formed in the protrusions 242, 245 and the grooves 243, 246 in this way, interference or friction is reduced when inserting the insertion portion 270, which has the effect of facilitating insertion of the insertion portion 270.

Referring to FIG. 9 as another embodiment, a curvature is formed in the protrusion 242 and groove 243 of the first unit 241 and the groove 246 and protrusion 245 of the second unit 244, but the degree of curvature is different from that in FIG. 2.

As described above, the expansion portion 240 is expanded on both sides by the insertion portion 270, and referring to FIG. 2, before the insertion portion 270 is inserted, that is, before the expansion portion 240 is expanded, the expansion portion 240 may be formed in a shape where the size of the diameter decreases from the top to the bottom. That is, the expansion portion 240 may be formed in the upper wide and lower narrow shape.

In this way, if the expansion portion 240 is formed in the upper wide and lower narrow shape, a spacing S is formed between the core portion 210 and the electrode assembly 10 when the core portion 210 is inserted into the center hole 140 of the electrode assembly 10, as shown in FIG. 7, and thus interference between the core portion 210 and the electrode assembly 10 is prevented, which has the effect of facilitating insertion of the core portion 210.

Referring to FIGS. 2 and 5 together, the diameter of the connection portion 230 may be configured to be smaller than the diameter of the support portion 220 and also smaller than the diameter of the expansion portion 240. And, the connection portion 230 is coupled to the center of the support portion 220, and the support portion 220 may be configured to have a wide width in the vertical direction at the center where the connection portion 230 is coupled, and a narrower width in the vertical direction from the center to both ends.

As a result, when the expansion portion 240 is expanded to both sides by the insertion portion 270, the support portion 220 and the expansion portion 240 do not interfere with each other.

Referring to FIGS. 2 and 5, the connection portion 230 has a smaller outer diameter than the support portion 220 and the expansion portion 240. And, the outer diameter of the uppermost end of the expansion portion 240 may be equal to or smaller than the outer diameter of the support portion 220. The insertion portion 270 is inserted inside the support portion 220 and the connection portion 230, and an opening is formed straight in the vertical direction in the support portion 220 and extends downward to be connected to the space.

The connection portion 230 separates the support portion 220 and the expansion portion 240 so that the lower end of the support portion 220 and the upper part of the expansion portion 240 do not interfere with each other when the expansion portion 240 is expanded by insertion of the insertion portion. Referring to FIG. 2, the support portion 220 and the expansion portion 240 are spaced apart by the width of the connection portion 230, and the distance between the support portion 220 and the expansion portion 240 increases as moving in an outward direction from the center of the connection portion 230 (W2 > W1).

In an embodiment, the support portion 220 may have a shape that is wide at the center where the connection portion 230 is formed and gradually decreases in width from the center to the outer periphery. That is, based on FIG. 5, the lower side of the support portion 220 may be formed to be inclined in an upward direction from the center to the end.

And, by being formed in this way, even if the insertion portion 270 is inserted into the core portion 210 and the outer diameter of the expansion portion 240 is expanded as shown in FIG. 5, the support portion 220 and the expansion portion 240 may be spaced apart by W3, thereby preventing interference between the support portion 220 and the expansion portion 240.

Hereinafter, a method for manufacturing the electrode assembly 10 including the center pin 20 and the cylindrical lithium-sulfur battery cell 1 including the electrode assembly 10 according to the present disclosure will be described in detail.

In an embodiment of the present disclosure, first, a separator 120 is interposed between a positive electrode plate 110 and a negative electrode plate 130, and they are wound around the winding core in a preset number of times. However, the method of forming the electrode assembly 10 into the shape of a jelly roll may vary and is not limited to the embodiment described above.

Next, the winding core is removed from the center of the wound jelly roll type electrode assembly 10. Then, the core portion 210 is inserted into the center hole 140 formed in the center of the jelly roll type electrode assembly 10 after the winding core is removed.

Here, the core portion 210 may be formed such that the outer diameter of one end gradually decreases along the longitudinal direction. And, the core portion 210 may be inserted from the inlet of the center hole 140 of the electrode assembly 10 to the opposite end.

Next, the jelly roll type electrode assembly 10 with the core portion 210 inserted is inserted into the cylindrical battery can 30. Here, prior to inserting the insertion portion 270 into the core portion 210, the electrode assembly 10 and the lower end of the battery can 30 may be coupled by welding.

Next, the insertion portion 270 is inserted into the core portion 210. Then, as the outer diameter of the core portion 210 is expanded by insertion of the insertion portion 270, the core portion 210 presses the electrode assembly 10 from the center of the electrode assembly 10 toward the battery can 30.

Meanwhile, an electrolyte may be injected into the battery can 30 before and/or after insertion of the insertion portion 270. In an embodiment of the present disclosure, the electrolyte may include an organic solvent and a lithium salt. The solvent serves as a medium where ions involved in the electrochemical reaction of the battery can move.

As an organic solvent, those used in conventional lithium secondary battery electrolyte may be used without limitation, and for example, ether, ester, amide, chain carbonate, cyclic carbonate, and the like may be used alone or in combination of two or more. Among these, ether-based compounds may be typically included.

The ether-based compounds may include acyclic ethers and cyclic ethers.

For example, the acyclic ether may be at least one selected from the group consisting of dimethyl ether, diethyl ether, dipropyl ether, methyl ethyl ether, methyl propyl ether, ethyl propyl ether, dimethoxyethane, diethoxyethane, ethylene glycol ethylmethyl ether, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether, and polyethylene glycol methyl ethyl ether.

For example, the cyclic ether may be at least one selected from the group consisting of 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene and isosorbid dimethyl ether, furan, 2-methyl furan, 3-methyl furan, 2-ethyl furan, 2-butyl furan, 2,3-dimethylfuran, 2,4-dimethylfuran, 2,5-dimethyl furan, pyran, 2-methylpyran, 3-methylpyran, 4-methylpyran, benzoburan, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, and 2,5-dimethylthiophene, but is not limited thereto.

An example of the ester in organic solvents may be any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone, and ε-caprolactone, and mixtures of two or more thereof, but is not limited thereto.

A specific example of linear carbonate compounds may be any one selected from the group consisting of dimethyl carbonate (DMC), diethyl carbonate (DEC), dipropyl carbonate, ethyl methyl carbonate (EMC), methyl propyl carbonate, and ethyl propyl carbonate, or mixtures of two or more thereof, but is not limited thereto.

In addition, specific examples of cyclic carbonate compounds may include ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and their halides, or mixtures of two or more thereof. Examples of such halides include, but not limited to, fluoroethylene carbonate (FEC) and the like.

Meanwhile, in the present disclosure, the lithium salt is a compound that can provide lithium ions in the electrolyte. Examples of the lithium salt may include LiPF₆, LiClO₄, LiAsF₆, LiBF₄, LiSbF₆, LiAlO₄, LiAlCl₄, LiCF₃CO₂, LiCF₃SO₃, LiC₄F₉SO₃, LiN(C₂F₅SO₃)₂, LiCH₃SO₃, LiN(C₂F₅SO₂)₂, LiN(CF₃SO₂)₂, LiC₄BO₈, LiCl, LiBr, LiB₁₀Cl₁₀, LiI, or LiB(C₂O₄)₂.

In an embodiment of the present disclosure, in terms of increasing the availability of sulfur and implementing high-capacity and high-voltage batteries, it is preferable that the lithium salt includes Li-TFSI. More preferably, the lithium salt may include LiN(CF₃SO₂)₂ (Li-TFSI) at a content of 80 wt% or more, 90 wt% or more, or 100 wt% based on 100 wt% of the total lithium salt.

The concentration of the lithium salt is in the range of 0.1 to 2.0 M, preferably 0.5 to 1 M, and more preferably 0.5 to 0.75 M. When the concentration of the lithium salt is within the above range, the electrolyte may have appropriate conductivity and viscosity, thereby exhibiting excellent electrolyte performance and effectively moving lithium ions.

If the concentration of the lithium salt is less than the above range, it may be difficult to secure ionic conductivity suitable for battery operation, and if it exceeds the above range, the viscosity of the electrolyte increases, which may degrade the mobility of lithium ions, or the decomposition reaction of the lithium salt itself increases, which may deteriorate battery performance.

In a specific embodiment of the present disclosure, in an electrolyte including a first solvent, a second solvent, and a lithium salt, the molar ratio of the lithium salt, the second solvent, and the first solvent may be 1:0.5 to 3:4.1 to 15.

In addition, in an embodiment of the present disclosure, the molar ratio of the lithium salt, the second solvent, and the first solvent may be 1:2:4 to 13, 1:3:3 to 10, or 1:4:5 to 10, and the electrolyte included in the lithium-sulfur battery of the present disclosure may include the first solvent containing a fluorine-based ether compound at a higher content ratio compared to the second solvent containing a glyme-based compound.

Meanwhile, referring to FIGS. 1, 7, and 8, the cylindrical lithium-sulfur battery cell 1 is configured to include an electrode assembly 10, a battery can 30, a positive electrode current collector 40, a cell terminal 50, and a negative electrode current collector 60 according to an embodiment of the present disclosure described above.

A detailed description of the electrode assembly 10 will be replaced by the above description.

The battery can 30 is formed in a cylindrical shape, has a through hole, and accommodates the electrode assembly 10. For example, the battery can 30 is formed in a cylindrical shape such that the electrode assembly 10 is accommodated inside the battery can 30 and may be electrically connected to the negative electrode plate 130 of the electrode assembly 10. Accordingly, the battery can 30 may have the same polarity as the negative electrode plate 130, that is, the negative electrode. However, it is not limited to this.

Here, the diameter of the battery can 30 is formed to be larger than the diameter of the electrode assembly 10. A gap of a predetermined size is formed between the battery can 30 and the electrode assembly 10 (between the battery can 30 and the positive electrode current collector 40 if the positive electrode current collector 40 is coupled to the electrode assembly 10), and an insulator may be interposed between the gaps.

The battery can 30 may be made of a material having conductivity, such as metal, for example. The material of the battery can 30 may be made of a conductive metal, such as aluminum, steel, stainless steel, or the like, but is not limited thereto.

The positive electrode current collector 40 is electrically connected to the positive electrode plate 110, and the positive electrode current collector 40 is connected to the positive electrode plate 110 at the upper portion of the electrode assembly 10. For example, the positive electrode current collector 40 may be made of a metal material having conductivity.

The cell terminal 50 is made of a conductive metal material and may be coupled to a through hole formed in the battery can 30 to be electrically connected to the positive electrode current collector 40 through the through hole. And, the cell terminal 50 is electrically connected to the positive electrode plate 110 of the electrode assembly 10 through the positive electrode current collector 40, thereby having a positive polarity.

That is, the cell terminal 50 may function as a positive electrode terminal. And, the battery can 30 is electrically connected to the negative electrode plate 130 of the electrode assembly 10 as described above, thereby having a negative polarity.

The negative electrode current collector 60 is electrically connected to the negative electrode plate 130. The negative electrode current collector 60 may be coupled to the lower portion of the electrode assembly 10. The negative electrode current collector 60 may be made of a conductive metal material such as aluminum, steel, copper, nickel, or the like.

The negative electrode current collector 60 may be electrically connected to the battery can 30. To this end, the negative electrode current collector 60 may be fixed with at least a part of an edge portion thereof interposed between the inner surface of the battery can 30 and the sealing gasket.

In an embodiment, at least a part of the edge portion of the negative electrode current collector 60 may be fixed to the beading portion by welding while being supported on the bottom surface of the beading portion formed at the lower end of the battery can 30. In a modified embodiment, at least a part of the edge portion of the negative electrode current collector 60 may be directly welded to the inner wall surface of the battery can 30.

And, at least a part of the edge of the negative electrode current collector 60 may be electrically coupled to the surface adjacent to the clamping portion between the upper and lower surfaces of the beading portion.

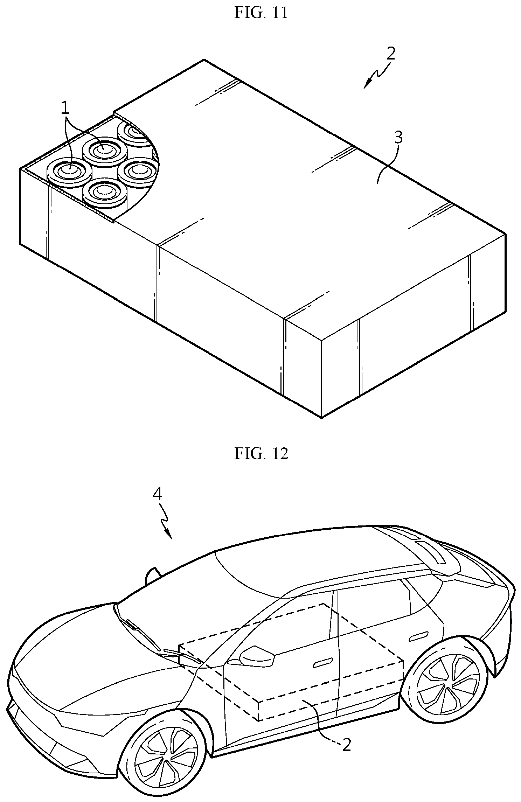

FIG. 11 is a view schematically showing the configuration of a battery pack according to an embodiment of the present disclosure, and FIG. 12 is a view for describing a vehicle including the battery pack of FIG. 11.

Referring to FIG. 11, a battery pack 2 according to an embodiment of the present disclosure may include one or more cylindrical lithium-sulfur battery cells 1 according to an embodiment of the present disclosure as described above. In addition, the battery pack 2 may further include a pack housing 3 for accommodating the cylindrical lithium-sulfur battery cell 1, various devices for controlling charge/discharge of the cylindrical lithium-sulfur battery cell 1, such as a BMS, a current sensor, a fuse, and the like.

Referring to FIG. 12, a vehicle 4 according to an embodiment of the present disclosure may include the above-described cylindrical lithium-sulfur battery cell 1 or battery pack 2. And, the cylindrical lithium-sulfur battery cell 1 or battery pack 2 according to an embodiment of the present disclosure may be applied to a vehicle 4, for example, a predetermined vehicle 4 designed to use electricity, such as an electric vehicle or a hybrid vehicle.

The present disclosure has been hereinabove described with regard to a limited number of embodiments and drawings, but the present disclosure is not limited thereto and it is obvious to those skilled in the art that a variety of modifications and changes may be made thereto within the technical aspects of the present disclosure and the equivalent scope of the appended claims.

Meanwhile, the terms indicating directions as used herein such as upper, lower, left, right, front, and rear are used for convenience of description only, and it is obvious to those skilled in the art that the term may change depending on the position of the stated element or an observer.

### INDUSTRIAL APPLICABILITY

The present disclosure relates to an electrode assembly and a cylindrical lithium-sulfur battery cell including the same, and a battery pack and a vehicle including the cylindrical lithium-sulfur battery cell, and is particularly applicable to industries related to secondary batteries.

## Claims

1. A jelly roll type electrode assembly having a structure in which a positive electrode plate, a negative electrode plate, and a separator interposed therebetween are wound in one direction and having a center hole formed therein,
the electrode assembly comprising a center pin that is inserted into the center hole to press the electrode assembly.

2. The electrode assembly according to claim 1,
wherein the center pin comprises:
a core portion that is inserted into the center hole, has an opening formed therein, and varies in the size of the diameter in at least a portion thereof; and
an insertion portion that is inserted into the opening of the core portion to adjust the size of the diameter of the core portion.

3. The electrode assembly according to claim 2,
wherein the core portion comprises:
a support portion located at the upper side and having the opening formed therein;
a connection portion coupled to the support portion; and
an expansion portion that is coupled to the connection portion, expands on both sides by the insertion portion and presses the electrode assembly in a centrifugal direction.

4. The electrode assembly according to claim 3,
wherein the expansion portion comprises a plurality of units,
wherein a preset space is formed between the plurality of units, and
wherein the insertion portion inserted from the opening is inserted through the space.

5. The electrode assembly according to claim 4,
wherein the expansion portion comprises a first unit and a second unit,
wherein each of the first unit and the second unit has at least one protrusion and at least one groove, and
wherein the protrusion and groove of the first unit and the groove and protrusion of the second unit are alternately positioned to correspond to each other.

6. The electrode assembly according to claim 5,
wherein a portion of the protrusion of the first unit is configured to be engaged with a portion of the groove of the second unit, and a portion of the groove of the first unit is configured to be engaged with a portion of the protrusion of the second unit.

7. The electrode assembly according to claim 6,
wherein the protrusion and groove of the first unit have a curvature in a preset range, and the protrusion and groove of the second unit also have a curvature in a preset range.

8. The electrode assembly according to claim 7,
wherein the protrusion and groove of the first unit have a round shape, and the protrusion and groove of the second unit also have a round shape.

9. The electrode assembly according to claim 3,
wherein before the insertion portion is inserted, the expansion portion is formed in a shape where the size of the diameter thereof decreases from the top to the bottom.

10. The electrode assembly according to claim 3,
wherein the diameter of the connection portion is configured to be smaller than the diameter of the support portion and to be also smaller than the diameter of the expansion portion.

11. The electrode assembly according to claim 3,
wherein the connection portion is coupled to the center of the support portion, and
wherein the support portion has a wide width in the vertical direction at the center where the connection portion is coupled and a narrower width in the vertical direction from the center to both ends.

12. The electrode assembly according to claim 2, wherein the insertion portion comprises:
a head; and
a rod portion extending from the head.

13. A cylindrical lithium-sulfur battery cell comprising:
an electrode assembly according to any one of claims 1 to 12;
a cylindrical battery can in which the electrode assembly is accommodated;
a positive electrode current collector electrically connected to the positive electrode plate;
a cell terminal connected to the positive electrode current collector through a through hole of the battery can; and
a negative electrode current collector electrically connected to the negative electrode plate.

14. A battery pack comprising a cylindrical lithium-sulfur battery cell according to claim 13.

15. A vehicle comprising a cylindrical lithium-sulfur battery cell according to claim 13.
